# EUROPEAN PATENT APPLICATION

(11) **EP 1 739 651 A2**
(43) Date of publication of application: **03.01.2007**
(21) Application number: 06253476.3
(22) Date of filing: 03.07.2006
(51) Int. Cl.: G09G 3/36

(54) **An apparatus and method for controlling power of a display device**

(30) Priority: 01.07.2005 KR 20050059331
(71) Applicant: LG Electronics Inc., Yongdungpo-gu Seoul (KR)
(72) Inventor: Woo, Jong Jin, Dongcheon-dong, Buk-gu, Daegu (KR)
(74) Representative: Camp, Ronald

(57) **Abstract**

In an apparatus and method for controlling power of a display device, dynamic contrast range is widened by controlling respective contrasts of each LED in the backlight of the display device. The apparatus comprises a video signal analyzer, a liquid crystal display (LCD), vertical gate drivers and horizontal drain drivers, a backlight, a power controller, and a controller. By controlling each LED, clearer video signal, lower dissipating power, and lower heat can be achieved.

## Description

The present invention relates to a power control module for display devices. It more particularly relates to a power control device for liquid crystal displays (LCDs).

The Liquid Crystal Display (LCD), which is a type of flat panel display, has gained a reputation as one of the next generation display devices for televisions, cellular phones and monitors along with Plasma Display Panels (PDPs) and Field Emission Displays (FEDs) because they offer some real advantages over other display technologies. They are thinner and lighter and draw much less power than cathode ray tubes (CRTs), for example. LCD displays utilize two sheets of polarizing material with a liquid crystal solution between them. An electric current passed through the liquid causes the crystals to align so that light cannot pass through them. Each crystal, therefore, is like a shutter, either allowing light to pass through or blocking the light. A simple LCD comprises a mirror in back, which makes it reflective, a piece of glass with a polarizing film on the bottom side, and a common electrode plane made of indium-tin oxide on top. A common electrode plane covers the entire area of the LCD. Above that is the layer of liquid crystal substance. Next comes another piece of glass with an electrode in the shape of the rectangle on the bottom and, on top, another polarizing film, at a right angle to the first one. LCD requires an external light source called a backlight since Liquid crystal materials emit no light of their own.

Light Emitting Diodes (LEDs) are widely used as the backlight. LEDs are capable of emitting light of an intended color without the use of color filters that traditional lighting methods require. The shape of the LED package allows light to be focused. Incandescent and fluorescent sources often require an external reflector to collect light and direct it in a useable manner.

LEDs are insensitive to vibration and shocks, unlike incandescent and discharge sources. LEDs are built inside solid cases that protect them, making them hard to break and extremely durable. LEDs have an extremely long life span: typically ten years, twice as long as the best fluorescent bulbs and twenty times longer than the best incandescent bulbs. (Incandescent bulbs can also be made to last an extremely long time by running at lower than normal voltage, but only at a huge cost in efficiency; LEDs have a long life when operated at their rated power.)

Further, LEDs fail by dimming over time, rather than the abrupt burn-out of incandescent bulbs. LEDs give off less heat than incandescent light bulbs with similar light output.

LEDs light up very quickly. An illumination LED will achieve full brightness in approximately 0.01 seconds, 10 times faster than an incandescent light bulb (0.1 second), and many times faster than a compact fluorescent lamp, which starts to come on after 0.5 seconds or 1 second, but does not achieve full brightness for 30 seconds or more. A typical red indicator LED will achieve full brightness in microseconds, or possibly less if it's used for communication devices.

However, there was a limit to make brighter displays because the LED backlight is typically controlled by a single on/off switch.

The present invention seeks to provide an improved display apparatus. It is more particularly directed to a display apparatus for controlling each LED according to the contrast of pixels in LCD.

Advantages and features of the invention will be set forth in part in the description which follows and in part will become apparent to those having ordinary skill in the art upon examination of the following or may be learned from practice of the invention.

In accordance with an aspect of the invention, a display apparatus comprises a video signal analyzer arranged to analyze contrast of a video signal by frame, a liquid crystal display (LCD) arranged to display the video signal including a plurality of pixels, vertical gate drivers and horizontal drain drivers arranged to provide power to the LCD, a backlight arranged to provide illumination to the LCD including a plurality of light emitting diodes (LEDs), a power controller arranged to provide power to the vertical gate drivers, the horizontal drain drivers, and the backlight, and a controller arranged to control the contrast of the backlight by each LED according to the analyzed contrast of the video signal.

In another aspect of the invention, a method for controlling power of a display device comprises receiving a video signal, analyzing a contrast of the video signal by calculating an average contrast of a predetermined number of pixels in a LCD, determining a backlight contrast adjustment value for each LED included in a backlight according to the calculated average contrast of the predetermined number of pixels in the LCD, transmitting the backlight contrast adjustment value from a controller to a power controller, providing a backlight control voltage for each LED corresponding to the backlight contrast adjustment value from the power controller to the backlight, and outputting different LED contrasts.

It is to be understood that both the foregoing general description and the following detailed description of the present invention are exemplary and explanatory and are intended to provide further explanation of the invention as claimed.

Embodiments of the invention will now be described by way of non-limiting example only, with reference to the drawings, in which:

FIG. 1 illustrates a block diagram of a power control in the display device according to the invention;

FIG. 2 illustrates a backlight configuration for controlling power in the display device according to the invention; and

FIG. 3 illustrates a flowchart for controlling power in the display device according to the invention.

Wherever possible, the same reference numbers have been used throughout the drawings to refer to the same or like parts.

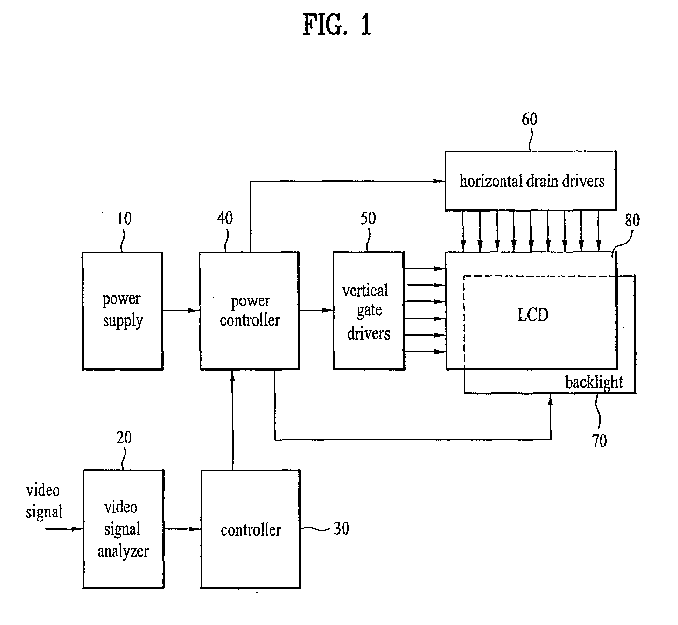

Referring now to FIG. 1, a power control module of a display device comprises a power supply (10), a video signal analyzer (20), a controller (30), a power controller (40), vertical gate drivers (50), horizontal drain drivers (60), backlight (70) and LCD (80).

The power supply (10) provides powers to the vertical gate drivers (50), the horizontal drain drivers (60) and backlight (70) via the power controller (40). The video signal analyzer (20) analyzes contrasts of the inputted video signals by frame. The controller (30) determines a backlight contrast adjustment value for each LED included in a backlight (70) according to the calculated average contrast of the predetermined number of pixels (81) in the LCD (80), and transmits the backlight contrast adjustment value to a power controller (40). The power controller (40) provides a backlight control voltage for each LED corresponding to the backlight contrast adjustment value from the power controller (40) to the backlight (70). The vertical gate drivers (50) are laid out along a short side of the LCD (80) and drive gates in the LCD pixels. The horizontal drain drivers (60) are laid out along a long side of the LCD (80) and drive drains in the LCD pixels. The backlight (70) includes a plurality of Light Emitting Diodes (LEDs) (71). The LCD (80) includes a plurality of pixels (81).

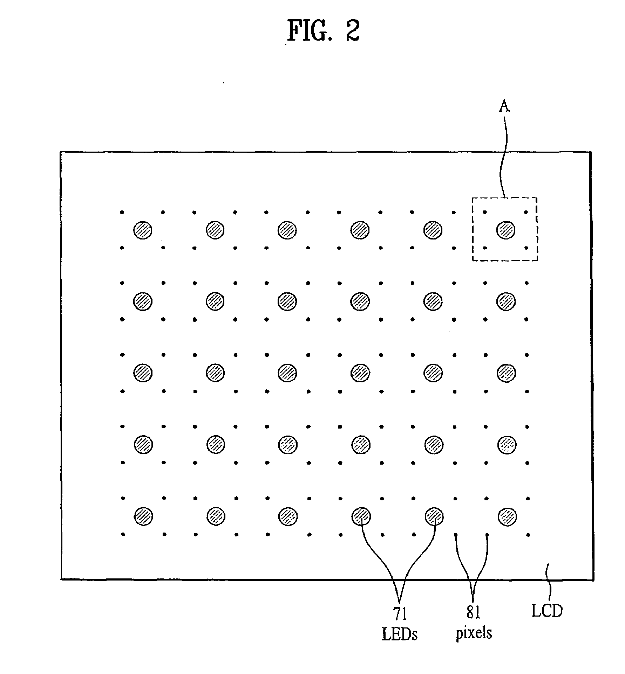

A backlight configuration for controlling power in the display device will now be described with reference to FIG. 2. As an example, the backlight configuration of the display module comprises four pixels (81) for each LED (71) as shown in the FIG. 2. Moreover, when the contrast of inputted video signal is analyzed by frame, the average contrast of the four pixels is calculated and used to determine the contrast of one LED. In other words, the contrast of each LED in the backlight is determined by the contrasts of the surrounding pixels. If each LED (71) has 8 bits, 256 different contrasts are available. Relating the video signal with the contrast of each LED, clearer video signals can be achieved.

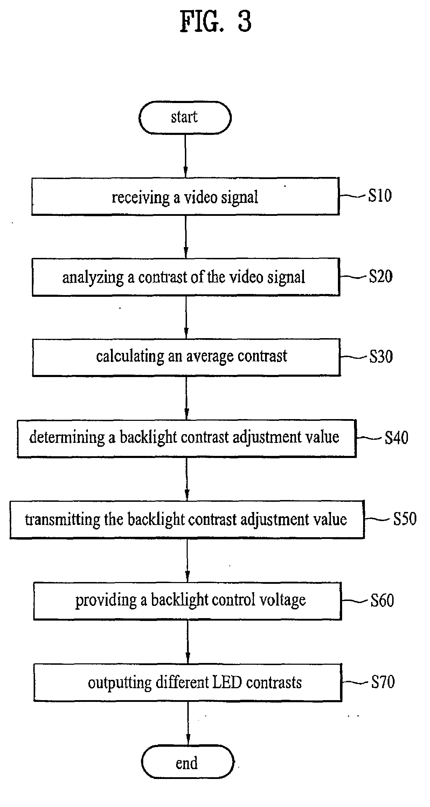

A method of controlling power in the display device will now be described with reference to the flowchart of FIG. 3. An apparatus suitable for carrying out the above method is disclosed hereinbefore in connection with the detailed description of the power control module in FIG. 1 and the backlight configuration in FIG. 2.

An exemplary process for controlling power of a display device comprises the following steps. First of all, the video signal analyzer (20) receives a video signal and analyzes the contrast of the video signal by calculating the average contrast of a predetermined number of pixels (81) in a LCD (80). The controller (30) determines a backlight contrast adjustment value for each LED included in a backlight (70) according to the calculated average contrast of the predetermined number of pixels (81) in the LCD (80), and transmits the backlight contrast adjustment value to a power controller (40). The power controller (40) provides a backlight control voltage for each LED corresponding to the backlight contrast adjustment value from the power controller (40) to the backlight (70), and the backlight (70) outputs different LED contrasts. At this time, the backlight has less LEDs than or equal to the number of pixels in the LCD and the predetermined number of pixels is determined by a number of total LEDs. Also, each LED compensates for contrasts of the same number of pixels. Moreover, backlight contrast adjustment values are obtained by comparing the average contrast of the predetermined number of pixels with a lookup table.

While embodiments of the invention have been described with respect to the physical embodiments constructed in accordance therewith, it will be apparent to those skilled in the art that various modifications, variations and improvements of the present invention can be made without departing from the scope of the invention. Thus, it is intended that the present invention covers the modifications and variations of this invention provided they come within the scope of the appended claims.

## Claims

1. A power control apparatus for a display device comprising:
a video signal analyzer arranged to analyze contrast of a video signal by frame;
a liquid crystal display (LCD) arranged to display the video signal including a plurality of pixels;
vertical gate drivers and horizontal drain drivers arranged to provide power to the LCD;
a backlight arranged to provide light to the LCD including a plurality of light emitting diodes (LEDs);
a power controller arranged to provide power to the vertical gate drivers, the horizontal drain drivers, and the backlight; and
a controller arranged to control the contrast of the backlight by each LED according to the analyzed contrast of the video signal.

2. The apparatus of claim 1, wherein the controller is arranged to calculate an average contrast adjustment value according to a number of pixels in the LCD.

3. The apparatus of claim 1, wherein the backlight has an array of LEDs.

4. The apparatus of claim 3, wherein the backlight has less LEDs than or equal to the number of pixels in the LCD.

5. The apparatus of claim 1, wherein each LED has a different contrast.

6. A method for controlling power of a display device comprising:
receiving a video signal;
analyzing the contrast of the video signal by calculating an average contrast of a predetermined number of pixels in a LCD;
determining a backlight contrast adjustment value for each LED included in a backlight according to the calculated average contrast of the predetermined number of pixels in the LCD;
transmitting the backlight contrast adjustment value from a controller to a power controller;
providing a backlight control voltage for each LED corresponding to the backlight contrast adjustment value from the power controller to the backlight; and
outputting different LED contrasts.

7. The method of claim 6, wherein the backlight has a number of LEDs less than or equal to the number of pixels in the LCD.

8. The method of claim 6 or 7, wherein the predetermined number of pixels is determined by the total number of LEDs.

9. The method of claim 8, wherein each LED is arranged to compensate contrast of the same number of pixels.

10. The method of any one of claims 6 to 9, wherein the backlight contrast adjustment values are obtained by comparing the average contrast of the predetermined number of pixels with a lookup table.
